# EUROPEAN PATENT SPECIFICATION

(11) **EP 0 487 643 B1**
(45) Date of publication and mention of the grant of the patent: **29.11.1995**
(21) Application number: 90913773.9
(22) Date of filing: 15.08.1990
(51) Int. Cl.: D02G 1/16, B01D 39/14

(54) **PRECOAT SEPTUM WITH A CONTINUOUS FILAMENT YARN**
GRUNDIERUNGSSEPTUM MIT UNUNTERBROCHENEM ENDLOSFASERFADEN
SEPTUM PRE-ENROBE AVEC FIL A FILAMENT CONTINU

(30) Priority: 18.08.1989 US 395512
(43) Date of publication of application: 03.06.1992
(73) Proprietor: MEMTEC AMERICA CORPORATION, Timonium MD 21093 (US)
(72) Inventor: BARBOZA, Steven, D., Baltimore, MD 21236 (US)
(74) Representative: Eyles, Christopher Thomas
(86) International application number: US9004594
(87) International publication number: WO9102649

(56) References cited:
- EP-A- 0 292 294
- GB-A- 2 043 734
- US-A- 3 144 747
- US-A- 3 828 934
- US-A- 4 426 420
- US-A- 4 476 186
- US-A- 4 612 237
- US-A- 4 948 549

## Description

This invention relates to a precoat septum according to the preamble of claim 1 and more particularly to a new and improved precoat septum utilizing an improved winding formed of yarns produced from continuous filaments.

### BACKGROUND OF THE INVENTION

GB-A-2043734 describes the production of a filter media sheet comprising fine particulate and a self-bonding matrix of cellulose fiber, the surfaces of at least one of which are modified with a polyamido-polyamine epichlorhydrin cationic resin, the matrix incorporating beaten cellulose fiber to provide a Canadian Standard Freeness of less than 600 ml. In such a filter media sheet the cellulose fibers are short and it is recommended to incorporate as much of the fine particulate, e.g. diatomaceous earth or perlite, as possible. Levels of 50 to 70% by weight of the fine particulate are generally used. Felting is said to be a suitable method of producing such a filter media sheet.

In US-A-4761231 there is proposed a tubular fluid filter comprising a winding of a bulk-textured multifilament yarn of a synthetic polymer, such as an air-jet textured yarn, having a take-up density of 0.20 to 0.50 cm³/cm³ on a tubular bobbin having apertures for the passage of fluid provided over the peripheral surface thereof, said bulk-textured filament yarn having no twist or a twist up to 80 T/M.

Precoat septa are similar in terms of design and construction to filtration devices known as wound tubular filter cartridges but are also different in some important respects. Tubular filter cartridges are well known in the art, and typically comprise a perforated tubular support core having a winding of yarn wrapped thereon which serves as the filter medium. In the case of precoat septa, the yarn winding does not serve as a filter medium, but rather as a permeable surface upon which materials such as powdered ion exchange resin or diatomaceous earth are deposited. Such materials coated onto the outer surface of the yarn winding, ionically attract and/or retain the particulate matter as the liquid influent flows into and through the yarn medium. When the outer surface of precoat and winding become sufficiently loaded with solids that flow therethrough becomes restricted, the septum is backflushed to dislodge the fouled resin along with the particulate matter, from its surface and wash it away. Thereafter, a new powdered ion exchange resin coating is applied to the winding surface, and the septum is reused until it again becomes loaded. It is intended therefore, that such septa be backflushed and reused many times.

The yarns utilized in precoat septa and the technique for winding the yarns onto the support core to produce an effective septum must be carefully selected and matched in order to achieve the degree of permeability, precoat retention, backflushing effectiveness, and service life desired. Usually, the yarns utilized are spun yarns made of staple fibers; i.e. typically natural fibers such as cotton or chopped man-made fibers, either of which are composed of short fibers, typically less than three inches (7.62 cm) in length, twisted together to form a continuous length of yarn, as is essential to effect a useful degree of cohesiveness to the fibers and a degree of tensile properties in the resulting yarn.

Unlike filter cartridges, where particle entrapment must be effected throughout the depth of the yarn winding filter medium, it is essential in precoat septum applications that no particle entrapment be effected within the body of the yarn winding. That is to say, in a cartridge filter, the cartridge is normally utilized until it becomes plugged or nearly plugged, and then it is discarded. Therefore, particle entrapment throughout the entire depth of the filter medium is essential to optimize the filter's usefulness. In the case of the precoat septa, however, backflushing is an essential requirement so that the device can be cleaned and reused over and over again. Ideally, therefore, particle entrapment within the depths of the winding is not desired, since particles entrapped within the depth do not flush out effectively. Accordingly, the yarn winding on a precoat septum is preferably wound to assure a tighter pore size, particularly on the surface of the winding, to prevent particulate matter from entering the depth of the yarn winding.

In practically all wound filter cartridge applications, the utilization of staple fiber yarns is deemed essential to effect the filtration desired. This is because the yarn is characterized by a high degree of bulk or surface "fuzziness" caused by the protrusion of the short fibers from the main body of yarn. Accordingly, when the yarn strands are wound onto the filter support core to provide a medium consisting of a plurality of adjacent and overlaying yarn strands, the short lengths of fiber criss-crossing the open spaces between the adjacent strands of yarn; i.e., the surface "fuzziness" of the staple fiber yarn, serves to prevent overpacking of the yarn as it is wound onto the support core to assure an adequate degree of permeability therethrough. In filter cartridges where the yarn winding functions as the filter medium, the surface fuzziness serves the additional function of entrapping the particulate matter so that the fuzziness is itself the primary filtering characteristic. These same concepts and materials are also employed in the design and manufacture of conventional precoat septa despite the fact that these devices are intended to serve functions distinct and separate from those of a filter cartridge as previously described.

The fuzziness characteristic of the yarn, while still deemed essential to prevent overpacking even in precoat septa, does create disadvantages in that the bulkiness tends to prevent an even coating of the powdered ion exchange resin or other precoat material, and further tends to interfere with the subsequent complete removal of the spent precoat from the winding surface during the backflushing operation. In addition, experience has shown that such yarns do not have sufficient tenacity and mechanical toughness to withstand the rigors of repeated backflushing to the extent desired, so that the yarns are easily frayed and the winding soon becomes loosened on the filter support core creating an undesirable, non-uniform surface which prevents the formation of a uniform precoat and may permit eventual bleedthrough of the precoat material. Bleedthrough of the precoat, of course, reduces the filtering and treatment effect and cannot be tolerated to any measurable degree, so that such a septum must then be discarded. Similarly, a non-uniform precoat thickness permits the passage of fluid which has not been completely filtered nor treated, thereby defeating the function of the septum. Additionally, yarns wound of staple fibers have an undesirable degree of non-uniformity with respect to strength, weight and surface characteristics, making it particularly difficult to manufacture a precoat septum with consistent performance characteristics.

Yarns produced from continuous fibers or filaments also do not normally provide the balance of permeability, uniform precoat formation, precoat retention, and backflushability desired in precoat septa. This is because the continuous filaments from which the yarns are produced are not short strands, but rather are continuous strands, being as long or longer than the yarn itself, are longitudinally oriented, tending to be reasonably straight and highly parallel, and do not therefore, have the protruding fibers, i.e., surface "fuzziness", that is essential to prevent overpacking and assure adequate permeability. Due to the lack of protruding fibers and bulk, such yarns are not particularly effective in retaining the precoat material on the surface of the septum. If the winding pattern is adjusted to reduce the size of the apertures between adjacent yarn strands to compensate for the lack of sufficient bulk and to thereby provide for adequate retention, the permeability of the wound structure becomes excessively restrictive to fluid flow. The utilization of continuous filament yarns, however, is desirable to some extent since good toughness and effective backflushing performance is obtained.

As a solution to the above problems, the utilization of a "textured" continuous filament yarn has been considered. Such yarns are characterized by fibers which have been given a "kink", "coil", "figure", "crimp", or some such geometric form other than straight by any one of a number of known processes, such as "false twist" "knit-deknit" "stuffer box" and other such processes to provide a "textured" characteristic to the resulting yarn. Such yarns, however, are not considered suitable for precoat septa. In the manufacture of precoat septa, high winding tension is essential to produce winding with sufficient surface hardness and structural integrity to withstand the stress of repeated backflushing. The tensions utilized tend to pull-out and straighten the textured fibers, so that the yarn, when wound on the support core resembles those of straight fibers, exhibiting the overpacking tendency and permeability limitation described above.

### SUMMARY OF THE INVENTION

This invention is predicated upon a new and improved precoat septum and particularly a winding therefor produced from a textured yarn manufactured of filaments of an organic polymeric material; e.g. polyolefin, polyester, or polyamide, or inorganic material; e.g. glass, formed into yarn by an air jet texturizing process, sufficient to produce randomly oriented, entangled loops in the yarn fibers. Hence according to the present invention there is provided a precoat septum for coating with particles of a particulate precoat material, said septum comprising a perforated support core having a medium thereon consisting essentially of a spiral winding of yarn wound sufficiently tightly on the core substantially to prevent entrapment of the particles of the particulate precoat material by the winding following backflushing, characterized in that the yarn is produced from continuous filaments of a material by air blowing a plurality of said filaments utilizing an air jet and drawing of filaments at a speed which is lower than the speed at which the filaments enter the jet, so that the filaments of the resulting yarn have a plurality of random entangled loops, with a sufficient degree of entanglement that said loops are not pulled out when the yarn is wound onto the support core under tension to form the spiral winding and when subjected to backflushing. While one commercial process for producing such a yarn is well known in the yarn art, namely the "Taslan" process, developed by E.I. duPont de Nemours Company, the use of such yarns has never before been considered for use in precoat septum applications, nor would there normally be any reason to believe that a "Taslan" yarn would be any better than any other textured yarn in this application ("Taslan" is a registered trade mark of E.I. duPont de Nemours Company, Wilmington, Delaware). The material of the continuous filaments from which the yarn is made may be an organic material which may be selected from, for example, polyolefins, polyamides and polyesters. Alternatively it may be an inorganic material such as glass. The winding of the precoat septum may, in use, be coated with a particulate precoat material such as an ion exchange resin or a diatomaceous earth.

### BRIEF DESCRIPTION OF THE DRAWINGS

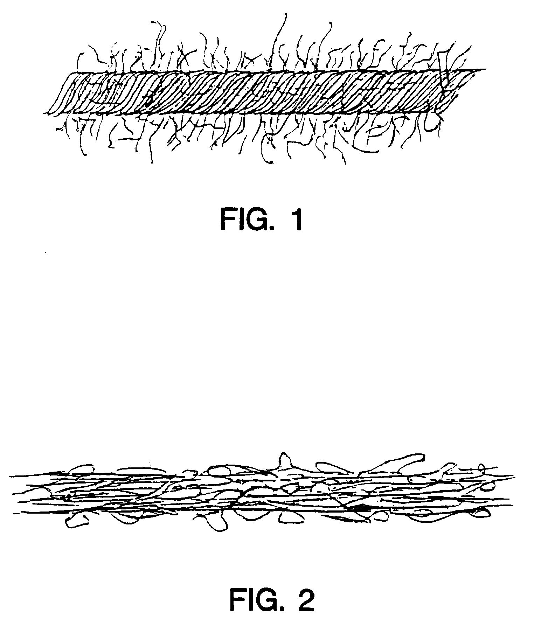

Figure 1 is a drawing illustrating the characteristics of a yarn made of staple fibers.

Figure 2 is a drawing illustrating the characteristics of a "Taslan" yarn made of continuous filaments.

### DETAILED DESCRIPTION OF THE INVENTION

In the "Taslanizing" process, a plurality of continuous filaments are longitudinally oriented and fed through an air jet to take-up rolls which draw off the fibers at a speed which is lower than the speed at which they are fed to the air jet. Since the take-up speed is lower than the feed speed, the air jet causes the formation of many randomly spaced and entangled loops in the individual fibers. Operating parameters such as jet design and air speed, take-up speed, tension and the like, can be varied significantly to effect a range of loop sizes, frequency and orientation to provide considerable versatility in the process. The looped characteristic of the filaments normally increase the sectional volume of the yarn by factors of from 50 to 200 percent. But for the loops, the individual filament strands tend to be rather straight and highly parallel and not provided with kinks, coils, figures, or other geometric forms which are characteristic of filaments in other textured yarns. Even though the individual filaments remain continuous, as well as reasonably straight and parallel but for the loops, the loops do render the yarn more characteristic of a yarn composed of staple fibers.

Due to the above described characteristics of "Taslanized" yarns, the yarns can be wound even under considerable tension without loosing their bulkiness or fuzzy characteristics. In addition, the yarns exhibit the good strength and toughness characteristics of continuous filament yarns. Therefore, the use of such yarns as a winding in precoat septa, enables the yarn to be as tightly wound as necessary to effect the desired pore size (precoat retention) without losing the yarn's bulkiness, and further permits the yarn to withstand a greater degree of backflushing without structural degradation, as compared to the yarns of the prior art. Although the yarn fibers are continuous, the looped characteristic of the fibers keeps the yarn strand sufficiently open that the yarn is not overpacked when wound into a medium, even at considerable tensions, enabling the yarn to be more characteristic of a yarn of staple fibers than one of continuous fibers. Yet, the looped continuous fiber yarn is less "fuzzy" than the yarns produced from staple fibers, thereby permitting a more uniform coating of resin, and permitting a more complete removal of spent resin during the backflushing operations. Because of the greater degree of uniformity of the yarn and the winding produced therefrom, manufacturing scrap can be decreased and manufacturing efficiency increased, while also permitting the manufacture of precoat septa with excellent and consistent performance characteristics.

### EXAMPLE

To illustrate one example of this invention, a septum was produced utilizing two 100% polypropylene multifilament yarns of 2520 denier/420 filaments each. The two yarns were combined and simultaneously textured utilizing the air jet texturing method, to form a single textured yarn of 5929 total denier/840 filaments. The textured yarn denier of 5929 resulted from the combination of the two 2520 denier feed yarns plus a 17.6% increase in denier caused by the looping of the individual filaments composing the textured yarn.

A tubular septum was constructed by winding the above yarn on a perforated, metallic support core using a precision cross winding machine. The amount of tension placed on the yarn during the winding process and the pattern in which the yarn was wound onto the support core were carefully selected to produce a septum with desired permeability, retention and backflushing characteristics. The weight of the resulting septum winding was 566 grams and its density was 0.40 g/cm³. The dimensions of the tubular septum were 4.45 cm outside diameter, by 2.75 cm inside diameter by 148.29 cm long, excluding end fittings.

The ability of the septum to provide a satisfactory and reusable surface for the formation of a uniform and effective resin precoat was evaluated by precoating the septum with ion exchange resin, visually examining the condition of the precoat and septum during and after formation, testing the coated septum for contaminate removal efficiency and contaminate holding capacity (life), backflushing the septum, and then repeating this entire test sequence several times.

The ion exchange resin utilized was a powdered, mixed cation/anion resin manufactured by Epicor, Inc., and designated by the manufacturer as Epifloc 91 H. A particle size analysis of the resin, performed by an independent laboratory is shown in Table 1. An aqueous slurry was prepared with a resin concentration of 4% by weight. The slurry was injected at a flow rate of 600 milliliters per minute into the inlet water flow of 19 liters per minute (LPM) to build the precoat.

The coated septum was subjected to life and efficiency testing using AC Fine Test Dust, supplied by the AC Spark Plug Division of General Motors Corporation, as the test contaminate. An aqueous slurry with a contaminate concentration of 25 parts per million (PPM) was prepared and was pumped to the septum housing and through the septum in an outside to inside flow direction at a flow rate of 19 LPM. Samples of test fluid immediately upstream and downstream of the septum were collected at the start of the test for analysis. The pressure differential (ΔP) across the septum was monitored and recorded throughout the test. An electronic particle counter was used to measure the number and size of particles in the fluid samples collected. The flow through the septum was maintained until a terminal ΔP of approximately 1757 gm/sq. cm was reached. The contaminate holding capacity or life of the device was calculated based on the contaminate concentration, flow rate, and test duration.

Upon completion of the life and efficiency test, the septum was backflushed by introducing compressed air at a pressure of 6300 gm/sq. cm in the reverse flow direction (inside to outside) and simultaneously draining the septum housing. The housing was then refilled with water and the backflushing process was repeated twice providing a total of three backflushing cycles. After the final backflush, the entire test sequence, i.e., precoating followed by life and efficiency testing followed by three back flushing cycles, was repeated four times thereby exposing the septum to five complete test cycles.

The particle removal performance of the septum is stated in terms of measured particle sizes at particular levels of efficiency. The efficiency and life results for each of the five test cycles is presented in Table 2. Three different efficiency levels, i.e., 90%, 95%, and 98% are listed to summarize the particle removal performance of the septum. A particle size, in micrometers (»m), is listed for each efficiency level. Ninety percent efficiency means that the septum removed 90% of the particles of the size listed. The test data and observations made during the test indicate that the septum provides a satisfactory surface for precoat formation, that the precoated septum is effective in retaining 0.9 to 1.9 »m particles at the 90% efficiency level, and that the septum can be effectively backflushed and reused repeatedly without structural degradation or a significant increase in differential pressure.

**TABLE 1**

| **Resin Particle Analysis** | |
|---|---|
| Particle Size (»m) | % by Weight |
| 5-10 | 0.4 |
| 10-15 | 1.1 |
| 15-25 | 5.4 |
| 25-50 | 24.7 |
| 50-80 | 22.4 |
| >80 | 46.0 |

**TABLE 2**

| **Life and Efficiency Results** | | | | | |
|---|---|---|---|---|---|
| | Precoat Number | | | | |
| | 1 | 2 | 3 | 4 | 5 |
| 90% efficiency (mm) | 1.3 | 1.9 | 1.7 | 1.0 | 0.9 |
| 95% efficiency (mm) | 1.4 | 2.1 | 1.9 | 1.3 | 1.1 |
| 98% efficiency (mm) | 1.6 | 2.4 | 2.4 | 1.7 | 1.5 |
| Contaminate Holding Capacity (grams) | 41.5 | 34.3 | 28.4 | 31.3 | 30.1 |
| Initial DP (gm/cm²) | 112.5 | 126.5 | 133.5 | 119.5 | 126.5 |
| Final DP (gm/cm²) | 1757.5 | 1827.8 | 1792.6 | 1757.5 | 1757.5 |

## Claims

1. A precoat septum for coating with particles of a particulate precoat material, said septum comprising a perforated support core having a medium thereon consisting essentially of a spiral winding of yarn wound sufficiently tightly on the core substantially to prevent entrapment of the particles of the particulate precoat material by the winding following backflushing, characterized in that the yarn is produced from continuous filaments of a material by air blowing a plurality of said filaments utilizing an air jet and drawing of filaments at a speed which is lower than the speed at which the filaments enter the jet, so that the filaments of the resulting yarn have a plurality of random entangled loops, with a sufficient degree of entanglement that said loops are not pulled out when the yarn is wound onto the support core under tension to form the spiral winding and when subjected to backflushing.

2. A precoat septum according to claim 1, characterized in that said material of said continuous filaments is an organic polymeric material.

3. A precoat septum according to claim 2, characterized in that said organic polymeric material is selected from polyolefins, polyamides and polyesters.

4. A precoat septum according to claim 1, characterized in that said material of said continuous filaments is an inorganic material.

5. A precoat septum according to claim 4, characterized in that said inorganic material is glass.

6. A precoat septum according to any one of claims 1 to 5, characterized in that said winding is coated with a particulate precoat material selected from ion exchange resins and diatomaceous earths.

## Patentansprüche

1. Precoat-Scheidewand zum Beschichten mit Partikeln eines partikulären Precoat-Materials, wobei genannte Scheidewand folgendes umfaßt: Einen perforierten Trägerkern mit einem Medium darauf, das im wesentlichen aus einer spiralförmigen Wicklung aus Garn besteht, das ausreichend fest auf den Kern aufgewickelt ist, um im wesentlichen einen Einschluß der Partikel des partikulären Precoat-Materials durch die Wicklung nach Rückspülung zu verhindern, dadurch gekennzeichnet, daß das Garn aus Endlosfäden aus einem Material durch Blasen mit Luft einer Vielzahl genannter Fäden unter Verwendung eines Luftstrahls und Strecken von Fäden bei einer Geschwindigkeit produziert wird, die geringer ist als die Geschwindigkeit, bei der die Fäden in den Strahl dergestalt eintreten, daß die Fäden des sich ergebenden Garns eine Vielzahl ungeordneter verknäulter Schlingen, mit einem ausreichenden Verknäulungsgrad aufweisen, daß genannte Schlingen nicht herausgezogen werden, wenn das Garn zur Bildung der spiralförmigen Wicklung unter Spannung auf den Trägerkern gewickelt und wenn es einer Rückspülung ausgesetzt wird.

2. Precoat-Scheidewand nach Anspruch 1, dadurch gekennzeichnet, daß genanntes Material von genannten Endlosfäden ein organisches Polymermaterial ist.

3. Precoat-Scheidewand nach Anspruch 2, dadurch gekennzeichnet, daß genanntes organisches Polymermaterial unter Polyolefinen, Polyamiden und Polyestern ausgewählt wird.

4. Precoat-Scheidewand nach Anspruch 1, dadurch gekennzeichnet daß genanntes Material aus genannten Endlosfäden ein anorganisches Material ist.

5. Precoat-Scheidewand nach Anspruch 4, dadurch gekennzeichnet, daß genanntes anorganisches Material Glas ist.

6. Precoat-Scheidewand nach einem der Ansprüche 1 bis 5, dadurch gekennzeichnet daß genannte Wicklung mit einem partikulären Precoat-Material beschichtet ist, das unter Ionenaustauschharzen und Diatomeenerden ausgewählt wird.

## Revendications

1. Un septum pré-enrobé dont l'enrobage contient des particules d'un matériau pré-enrobé particulaire, ledit septum étant composé d'un noyau de support perforé comportant un matériau sur le dessus consistant essentiellement en un enroulement de fil en spirale, enroulé de façon suffisamment serrée sur le noyau, pour empêcher en grande partie le piégeage des particules du matériau pré-enrobé particulaire par l'enroulement suite au rinçage, caractérisé par le fait que le fil est produit à partir de filaments continus d'un matériau obtenu par le soufflage d'une pluralité desdits filaments à l'aide d'un jet d'air et la prise des filaments à une vitesse plus basse que la vitesse à laquelle les filaments pénètrent dans le jet, de façon à ce que les filaments du fil résultant soient composés d'une pluralité de boucles emmêlées au hasard, avec un degré suffisant d'embrouillement pour que lesdites boucles ne puissent pas se retirer lorsque le fil est enroulé sur le noyau de support sous tension pour former l'enroulement en spirale et qu'il est soumis à un rinçage.

2. Un septum pré-enrobé selon la revendication 1, caractérisé par le fait que ledit matériau desdits filaments continus est un matériau polymérique organique.

3. Un septum pré-enrobé selon la revendication 2, caractérisé par le fait que ledit matériau polymérique organique est sélectionné à partir de polyoléfines, de polyamides et de polyesters.

4. Un septum pré-enrobé selon la revendication 1, caractérisé par le fait que ledit matériau desdits filaments continus est un matériau inorganique.

5. Un septum pré-enrobé selon la revendication 4, caractérisé par le fait que ledit matériau inorganique est du verre.

6. Un septum pré-enrobé selon l'une quelconque des revendications 1 à 5, caractérisé par le fait que ledit enroulement est enrobé d'un matériau pré-enrobé particulaire sélectionné à partir de résines d'échange d'ions et de terres à diatomées.
